# EUROPEAN PATENT SPECIFICATION

(11) **EP 2 124 574 B1**
(45) Date of publication and mention of the grant of the patent: **09.12.2015**
(21) Application number: 07729186.2
(22) Date of filing: 16.05.2007
(51) Int. Cl.: A01N 63/04, A01P 13/02

(54) **USE OF TERMITE POWDER INOCULUM FOR IMPROVING CULTURE GROWTH**
VERWENDUNG VON TERMITENPULVER-INOKULUM FÜR DIE VERBESSERUNG DES WACHSTUMS VON KULTUREN
UTILISATION D'UN INOCULUM DE POUDRE DE TERMITE POUR AMELIORER LA CROISSANCE D'UNE CULTURE

(30) Priority: 29.03.2007 EP 07105277
(43) Date of publication of application: 02.12.2009
(73) Proprietor: Institut de Recherche pour le Développement ( IRD), 75480 Paris Cedex 10 (FR)
(72) Inventor: DUPONNOIS, Robin, 71640 Mercurey (FR); BALLY, René, 69130 Ecully (FR)
(74) Representative: Grosset-Fournier, Chantal Catherine
(86) International application number: PCT/EP2007/054738
(87) International publication number: WO 2008/119394

(56) References cited:
- EP-A- 0 022 910
- EP-A1- 0 673 947
- WO-A-01/75116
- FR-A- 2 848 567
- PASTI M B ET AL: "LIGNIN-SOLUBILIZING ABILITY OF ACTINOMYCETES ISOLATED FROM TERMITE TERMITIDAE GUT" APPLIED AND ENVIRONMENTAL MICROBIOLOGY, vol. 56, no. 7, 1990, pages 2213-2218, XP002432203 ISSN: 0099-2240 cited in the application
- DUPONNOIS R ET AL: "Functional diversity of soil microbial community, rock phosphate dissolution and growth of Acacia seyal as influenced by grass-, litter- and soil-feeding termite nest structure amendments" GEODERMA, ELSEVIER SCIENCE, AMSTERDAM, NL, vol. 124, no. 3-4, February 2005 (2005-02), pages 349-361, XP004669070 ISSN: 0016-7061
- ANONYMOUS: "Annual Meeting of the Working Phytomedicine-in-the-Tropics-and-Subtr opics of the German-Phytomedical-Society, Bonn, GERMANY, October 11 13, 2006" JOURNAL OF PLANT DISEASES AND PROTECTION, vol. 114, no. 1, January 2007 (2007-01), pages 37-47, XP001536305 & ANNUAL MEETING OF THE WORKING PHYTOMEDICINE-IN-THE-TROPICS-AND-SUBTR OPICS OF THE GERMAN-PHYTOMEDICAL; BONN, GERMANY; OCTOBER 11 -13, 2006 ISSN: 1861-3829(print) 1861-3837(ele
- ANA ISABEL GUTIERREZ G ET AL: "Fungi associated with termites and their nests in eucalyptus plantations" REVISTA COLOMBIANA DE ENTOMOLOGIA, vol. 30, no. 1, January 2004 (2004-01), pages 7-13, XP001536406 ISSN: 0120-0488
- SAUERBORN ET AL: "The role of biological control in managing parasitic weeds", CROP PROTECTION, ELSEVIER SCIENCE, GB, vol. 26, no. 3, 19 January 2007 (2007-01-19), pages 246-254, XP005835629, ISSN: 0261-2194, DOI: 10.1016/J.CROPRO.2005.12.012
- Mutsuo Nakajima5 ET AL: "THE JOURNAL OF ANTIBIOTICS HYDANTOCIDIN: A NEW COMPOUND WITH HERBICIDAL ACTIVITY FROM Streptomyces hygroscopicus", , 1 January 1990 (1990-01-01), XP055188475, Retrieved from the Internet: URL:https://www.jstage.jst.go.jp/article/a ntibiotics1968/44/3/44_3_293/_pdf [retrieved on 2015-05-11]

## Description

The present invention relates to the use of termite powder inoculum for improving culture growth.

Termitaries are structures edified by different termite species naturally existing in Africa's areas, particularly *Cubitermes* sp.

The termite intestines contain *Actinomycetes,* the use of which, after intestine isolation, is known for the lignin or cellulose degradation (M B Pasti et al. Appl Environ Microbiol. 1990; 56(7): 2213-2218 ; Watanabe Y et al. Biosci Biotechnol Biochem. 2003 Aug; 67(8):1797-801) or as decontamination process of the soil of chemical compounds such as phenol, cresol, furan, trichloroethylene.

The use of termite powder is also known to stimulate biological interactions of the soil and eliminate pathogen agents such as Rhizoctonia fungi spp. (Lepage M et al., Sciences au Sud- Le Journal de l'IRD ; mai/juin 2006 ; N°35).

Parasitic flowering plants are defined by the production of specialized feeding structures, described as haustoria that form a functional bridge into their hosts. Haustoria penetrate the host tissue until they reach the vascular system for uptake of water, nutrients, and assimilates. Haustorial parasistism has evolved at least 12 times within angiosperms, including a number of economically important species which can cause damage to cultivated plants.

Economically important parasitic angiosperms belong to five families: *Cuscutaceae, Lauraceae, Orobanchaceae, Viscaceae, Loranthaceae* that reduce crop yield and quality of various cultures (Sauerborn J. et al., Crop Protection, 26 (2007), 246-254).

*Striga* is a genus of obligate root parasitic plants from the *Orobanchaceae* family, also known as witchweeds, which comprises forty one species of which twenty height occur in Africa. One of these species, *Striga hermonthica* (Del.) Benth is a serious pest for cereals in the savanna region of Africa (Olivier A., Agronomie 15 (1995), 517-525) which can cause important yield losses in cereals such as maize (*Zea mays* L.), sorghum (*Sorghum bicolor* L.) and millet (*Pennisetum typhoides* L.) (Parker C., Crop Protect.,10 (1991), 6-22). It has been asserted that this species is the largest biological constraint on food production in sub-Saharan Africa and crop losses due to *Striga* were estimated to more than 7 billions US $ (Lenné J., Outl. Agric., 29, (2000), 235-250).

The life cycle of *Striga* is mainly dependent on that of its host. *Striga* produces thousands of minute, dust-like seeds that can remain viable in the soil for over a decade (Bebawi et al., Weed Sci., 32, (1984), 494-497). Germination of seeds is induced by exudates of many plants, including both the above-mentioned cereals and so-called trap crops (Bouwmeester et al., Curr. Opin. Plant. Biol., 6 (2003), 358-364). The latter plants stimulate *Striga* germination but without becoming infected by the root hemi-parasite, as subsequent attachment and haustorial formation can only take place on true hosts (Parkinson V.et al., FAO Plant Protect. Bull., 35, (1987), 51-54; Ejeta G. et al., African Crop J., 1(2), (1993), 75-80; Olivier A., Agronomie 15 (1995), 517-525).

Approximately 75% of the overall *Striga* damage to the host is made during its subterranean stage of development (Bebawi et al., Weed Sci., 32, (1984), 494-497; Parker C et al., Parasitic Weeds of the world: Biology and Control. CAB International, Wallingford, UK, (1993)). Although it has been demonstrated that up to 35% of the plant carbon demands are met by its autotrophic host (Pageau et al., Austr. J. Plant. Physiol., 25 (1998), 695-700), this source-sink relations between *Striga* and its host does not fully explain the damage done by the parasite. It has been demonstrated that *Striga* exerts a potent phytotoxic effect on the host (Rank et al., Weed Res., 44(4), (2004), 265-270). This phytotoxic effect is evident in the fact that the damage that *Striga* does to the cereal crops can reach maximum before the parasite emerges above-ground. Managing *Striga* below-ground is therefore a crucial for successful *Striga* management.

The control of *Striga* is difficult to achieve because of its high fecundity. In addition, seed germination is asynchronous (Worsham et al., Physiology of witchweed seed dormancy and germination. In: Witchweed Reserch and control in the United States, eds Sand PF, Eplee RE, Westbrooks RG, Weed Science Society of America, Champaign, USA, (1990), ppl 1-26).

Therefore, management of *Striga* infestation heeds an integrated approach including host plant resistance, cultural practices, and chemical and biological treatments.

One of the most suitable control option is the development of resistant crop varieties. Unfortunately, in many crops, no resistant varieties have been discovered to date. (Sauerborn J. *et al.,* **26** (2007), 246-254).

Culture practices comprise quarantine that necessitates regulatory constraints, crop rotation that is not effective because seeds remain dormant, trap crop that is not feasible to "flush" out a very large number of seeds (Sauerborn J. *et al.,* **26** (2007), 246-254).

Chemicals such as herbicides can be applied at a certain growth stage of the crop when the root parasite is still underground. The herbicides concentrate in the parasites by translocation through the host-plant or through the soil solution until the die. However, often the timing and rate of herbicide application is critical because a proper concentration proportional to the parasite biomass has to be achieved without causing damage to crop (Sauerborn J. *et al.,* **26** (2007), 246-254).

Among all the components of this integrated *Striga* management, biological control could be used in Africa by the resource-poor farmers if it gives a demonstrable crop-yield benefit within one growing season (Ahonsi et al., Biol. Contr. 24 (2002), 143-152). In this context, it has recently been demonstrated that certain soil microorganisms can inhibit or suppress germination (Parker C et al., Parasitic Weeds of the world: Biology and Control. CAB International, Wallingford, UK, (1993) ; 1993; Berner D. K. et al., Plant Dis.,79 (1995), 652-670; Miché L. et al., Eur. J. Plant Pathol., 106 2000, 347-351; Ahonsi et al., Biol. Contr. 24 (2002), 143-152). Indeed, some studies (Bouillant M. L. et al., C. R. Acad. Sci. III-vie, 320 (2), (1997), 159-162; Ahonsi et al., Biol. Contr. 24 (2002), 143-152). have shown that certain soil-borne saprophytic bacteria have a potential to control *S. hermonthica* by inhibiting seed germination. However, the survival of inoculated bacteria was usually not sustained in subsequent crops and it implied repeated application for every cropping season (Ahonsi et al., Biol. Contr. 24 (2002), 143-152). Another strategy is to use natural compounds (i.e. organic matter inputs) (Sauerborn et al., Appl. Soil Ecol., 23, (2003), 181-186), nevertheless, this matter requires an active microflora to liberate the bioavailable nitrogen, but the microbial population in these damaged soils is not very active, or N fertilization (Khan Z. R. et al., J. Chem. Ecol., 28, (2002), 1871-1885), however these nitrogenous fertilizers are too expensive to be used by African farmers.

One of the aims of the invention is to provide a biological control agent for improving the growth of cultures, particularly cultures of cereals.

This aim is achieved by using a biological agent, the function of which is to inhibit the development and therefore the seed production of parasitic plants.

Thus the invention relates to the use of termite mound powder for the biological control of parasitic plants.

The term "biological" in the expression biological control means a natural control, i.e. a control carried out with a natural product without any use of chemical compounds such as herbicides, insecticides or fungicidal.

The term "control" means an agent which can inhibit or suppress parasitic plants, from the fifth week after the use of termite powder.

The term "parasitic plants" means a plant which cannot growth by itself and therefore needs a host to obtain the elements necessary to its development.

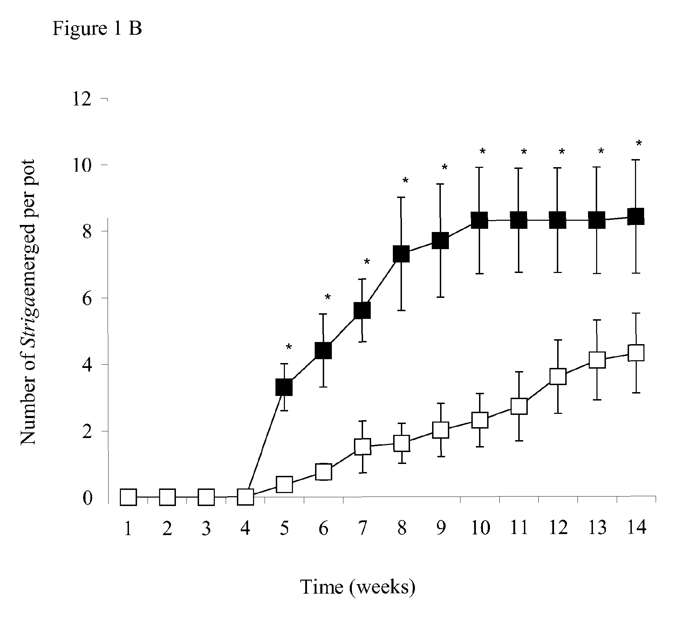

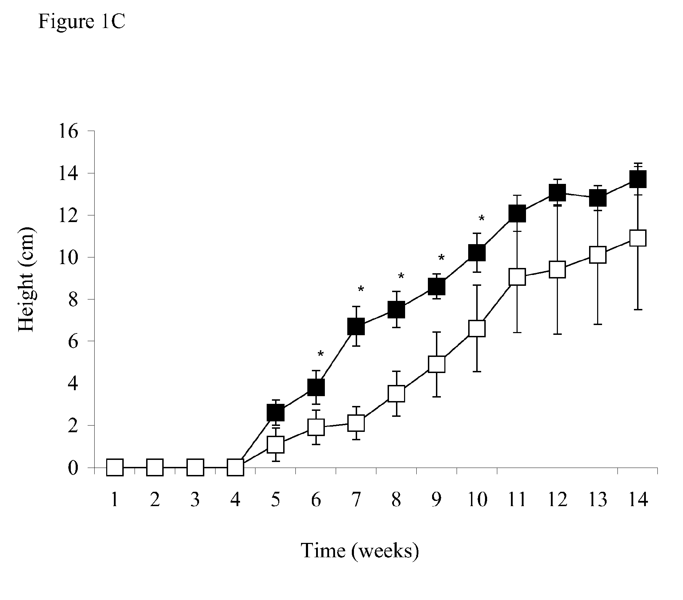

The biological control of parasitic plants can be seen from the fifth week in the cultures after the use of termite powder with the decrease of the number of emerged parasitic plants (figure 1B) and from the height of parasitic plants from the sixth to the tenth week after the use of the termite powder (figure 1C).

The termite powder used here has the advantages to be a natural product available in high quantity, with a very low cost and that can be used by the resource-poor farmers in Africa, and to obtain a demonstrable crop-yield benefit within a season.

According to a preferred embodiment, the invention relates to the use of termite mound powder, wherein the parasitic plants are hemiparasitic plants.

Parasitic plants can be divided in two categories, the first one, the hemiparasitic plants that retain some chlorophyll in their tissue, but often photosynthetic efficiency is reduced and the second one, the holoparasitic plants that cause a complete loss of photosynthesis.

According to a preferred embodiment, the invention relates to the use of termite mound powder, wherein hemiparasitic plants are selected from the family group consisting of *Custaceae, Lauraceae, Orobanchaceae, Loranthaceae and Viscaceae, preferably Orobanchaceae.*
*Custaceae* comprises mainly holoparasitic shoot, but a few species are hemiparasitic plants and can attack fruit trees.

*Lauraceae* includes the hemiparasitic genus *Cassytha* which is distributed throughout the tropics, parasiting mainly a wide range of fruit and timber trees.

*Orobanchaceae* comprises holoparasitic and hemiparasitic root parasites on cereals, legumes, vegetable, oil crops.

*Loranthaceae and Viscaceae* comprises hemiparasitic shoot parasites on woody plants.

According to another preferred embodiment, the invention relates to the use of termite mound powder wherein hemiparasitic plants of the *Orobanchaceae* family group are selected from the genus group consisting of *Alectra spp., Striga spp., preferably Striga spp..*

The genus *Alectra spp.* comprises thirty species, four are reported to be significant pests. Excessive damage is caused by *A. vogelii* and *A. picta* attacking predominantly *Vigna unguiculata* (cowpea), a food legume of the savanna areas in Africa. *A. orobanchoides* can be a problem in *Nicotina tabacum (tobacco)* in South Africa while *A. fluminensis* has been described as a pest in *Saccharum officinarum* (sugarcane) in Latina America (Sauerborn J. et al., Crop Protection, 26 (2007), 246-254).

*Striga spp*., also named witchweeds comprises fourty one species of which twenty height occur in Africa. The economic impact of witchweed is greatest in cereals cultivated in Africa, e.g. *Digitaria exilis* (fonio), *Eleusine coracana* (finger millet), *Oryza sativa* (rice), *pennisetum glaucum* (pearl millet). The most destructive species on cereals are *S. asiatica* and *S. hermonthica* and second in economic impact are *S. aspera* and *S. forbesii.*

According to another preferred embodiment, the invention relates to the use of termite mound powder wherein hemiparasitic plants of the *Striga spp.* genus group are selected from the species group consisting of *Striga asiatica, Striga hermonthica, Striga Aspera, Striga forbesii, Striga Generioides, preferably Striga hermonthica.*

According to another preferred embodiment, the invention relates to the use of termite mound powder wherein the termite mound powder is sampled from termites of the *Cubitermes* genus.
This genus is frequently observed in Africa and belongs to the soil-feeding termite group.

According to another preferred embodiment, the invention relates to the use of termite mound powder wherein the termite mound powder is in association with a substrate and thus constituting an inoculum.

By substrate is meant the natural culture soil or all the different composts made with cultures residues.

According to another preferred embodiment, the invention relates to the use of termite mound powder wherein the ratio termite mound powder versus substrate is comprised from 0.01 (w:v) to 0.1 (w:v), preferably from 0.05 (w:v) to 0.1 (w:v), and more preferably 0.1 (w:v).

According to another preferred embodiment, the invention relates to the use of termite mound powder wherein the ratio termite mound powder versus substrate is comprised from 0.05 (w:v) to 0.1 (w:v), or is 0.1 (w:v).

The use of a ratio termite powder versus substrate equal to 0.1 on a sorghum culture infested by *S. hermonthica,* in a greenhouse experiment, has significantly decreased the number of *Striga* plants emerged per pot from five weeks on and the height of *Striga* plants was decreased between the sixth and the tenth week, while the height of sorghum plants significantly increased.

The use of a ratio higher than 0.1, would lead to the use of too large quantities of termite powder and the use of a ratio lower than 0.01 would lead to an inactive powder.

According to another preferred embodiment, the invention relates to the use of termite mound powder in spaces intended for cultures, particularly cultures of cereals.

Thus, termite powder is able to decrease the growth of parasitic plants and, at the same time, to increase the growth of cultured plants.

By "spaces intended for culture" is meant all the kinds of containers comprising, but not limited to, suitable elements for the culture such as pots, boxes, jars, plates and all the kinds of lot, parcel of land, field, greenhouse...

Cereals cultures comprise barley, millet, maize, sorghum, corn, oat.

According to another aspect, the invention relates to the use of a composition comprising:
a. termite powder, the particles size constituting said powder being comprised from 100 µm to 1000 µm and preferably from 100 µm to 500 µm,
b. said substrate chosen among the natural culture soil, the compost arising from culture residues,
the ratio termite powder: substrate being comprised from 0.01 (w:v) to 0.1(w:v), preferably from 0.05 (w:v) to 0.1(w:v), and more preferably 0.1 (w:v).

Termite mound material is crushed and passed through a 2-mm sieve in order to obtain a fine powder thus eliminating the big particles such as stones.

Generally, more than 95% of the termitary can be crushed and obtained in the form of a fine powder.

If the termite mound is not crushed, particles are too big to be homogenised with the substrate.

The use of a ratio termite powder: substrate equal to 0.1 on a sorghum culture infested by *S. hermonthica* in a greenhouse experiment has significantly decreased the number of *Striga* plants emerged per pot from five weeks on and the height of *Striga* plants was decreased between the sixth and the tenth week, while the height of sorghum plants significantly increased.

According to a preferred embodiment, the invention relates to the use of a composition wherein the termite powder is sampled from termites of the *Cubitermes* genus.

According to another aspect, the invention relates to a process of biological control of parasitic plants in spaces intended for cultures, particularly cultures of cereals, comprising a step of introducing an inoculum in spaces intended for cultures to be treated, the inoculum being prepared by mixing the termite mound powder with a substrate, said powder being crushed.

The use of a ratio termite powder: substrate equal to 0.1 on a sorghum culture infested by *S*. *hermonthica* in a greenhouse experiment has significantly decreased the number of *Striga* plants emerged per pot from five weeks on and the height of *Striga* plants was decreased between the sixth and the tenth week, while the height of sorghum plants significantly increased.

The term inoculum refers to the association of the termite powder with a substrate chosen from the culture soil or the compost arising from culture residues.

The expression "introducing an inoculum in spaces intended for cultures" means that said inoculum is put e.g. into pots, boxes, jars, plates and all the kinds of lot, parcel of land, field, greenhouse...

According to a preferred embodiment, the invention relates to a process wherein the powder consists of particles size having a size comprised from 100 µm to 1000 µm and preferably from 100 µm to 500 µm.

According to a preferred embodiment, the invention relates to a process wherein the termite powder is sampled from termites of the *Cubitermes* genus.

According to another preferred embodiment, the invention relates to a process comprising a step of preparation of the inoculum by mixing said termite mound powder with a substrate, said substrate being chosen among the natural culture soil, the compost arising from culture residues, the ratio termite mound powder: substrate being comprised from 0.01 (w:v) to 0.1 (w:v), preferably from 0.05 (w:v) to 0.1 (w:v), and more preferably 0.1 (w:v).

According to a preferred embodiment, the invention relates to a process comprising a step of introduction of the inoculum in spaces intended for cultures, at doses comprised from 17 to 170 ml of inoculum per seed, semen, fruit, pip, pit or plant, particularly per seed or plant , preferably from 17 to 85 ml of inoculum, more preferably from 85 to 170 ml of inoculum, and more preferably at a dose of 170 ml of inoculum,.

According to a preferred embodiment, the invention relates to a process wherein one seed is sown or one plant is transferred per dose of inoculum introduced in the spaces intended for cultures.

According to another preferred embodiment, the invention relates to a process of biological control of parasitic plants comprising the following steps:
a. sampling and eventually crushing termite mound powder, the particles size of said powder having a size comprised from 100 µm to 1000 µm and preferably from 100 µm to 500 µm,
b. preparing an inoculum by mixing said powder with a substrate, said substrate being chosen among the natural culture soil, the compost arising from culture residues, the ratio termite mound powder: substrate being comprised from 0.01 (w:v) to 0.1 (w:v), preferably from 0.05 (w:v) to 0.1 (w:v), and more preferably 0.1 (w:v),
c. introducing the inoculum in spaces intended for cultures, at doses comprised from 17 ml to 170 ml of inoculum per seed or plant, preferably from 17 ml to 85 ml of inoculum per seed or plant, preferably from 85 ml to 170 ml of inoculum per seed or plant, and more preferably 170 ml of inoculum per seed or plant,
d. sowing one seed or transferring one plant in spaces intended for cultures containing said inoculum.

### BREVE DESCRIPTION OF FIGURES

**Figure 1A** represents the height (cm) of sorghum plants versus the time (weeks). White boxes are sorghum plants amended with the inoculum and black boxes are sorghum plants without inoculum. Stars indicate a significantly statistical result.
**Figure 1B** represents the number of *Striga* emerged per pot of Sorghum plant versus the time (weeks). White boxes are sorghum plants amended with the inoculum and black boxes are sorghum plants without inoculum. Stars indicate a significantly statistical result.
**Figure 1C** represents the height of *Striga* plants versus the time (weeks). White boxes are sorghum plants amended with the inoculum and black boxes are sorghum plants without inoculum. Stars indicate a significantly statistical result.
**Figure 2A** represents the number of *Striga* emerged versus the mycorrhizal colonisation (%). Mycorrhizal colonisation was negatively correlated with the number of emerged *Striga.*
**Figure 2B** represents the total biomass of Sorghum plants (g dry weight) versus the mycorrhizal colonisation (%). The mycorrhizal colonisation was positively correlated with Sorghum growth.
**Figure 3** represent the co-inertia analysis of the SIR responses of the soils amended with *Cubitermes* mound powder (experimental treatment) or non amended (control treatment) and Sorghum growth, *Striga* growth and microbiological variables.

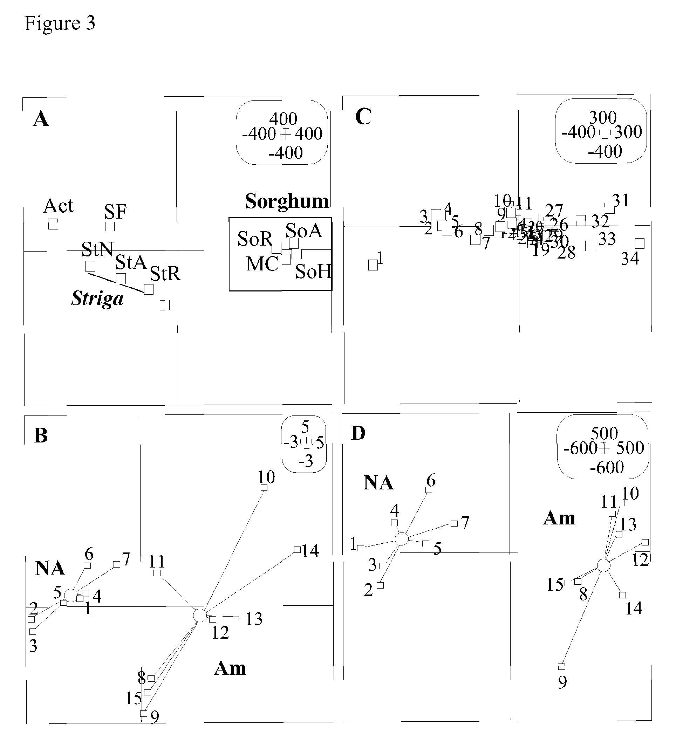

**A:** factor map of Sorghum and *Striga* growth (SF: saprophytic fungi; Act: actinomycetes; MC: Mycorrhizal colonization. StN: Number of emerged *Striga* per pot; StA: *Striga* aerial biomass; StR: *Striga* root biomass; SoA: Sorghum aerial biomass; SoR: Sorghum root biomass; SoH: Sorghum height).
**B:** Factor map of Sorghum and *Striga* growth and microbial variables soil samples (Am: *Cubitermes* mound powder amendment, Nam: Non Amended Soil).
**C:** factor map of SIR responses (1: Phenylalanine; 2: Ketobutyric acid; 3: Formic acid; 4: Ascorbic acid; 5: Asparagine; 6: Sucrose; 7: Oxalic acid; 8: Glucose; 9: Malic acid; 10: Histidine; 11: Citric acid; 12: Mannose; 13: Glutamine; 14: Uric acid; 15: Cyclohexane; 16: Succinic acid; 17: Gallic acid; 18: Na-citrate; 19: Fumaric acid; 20: Cystein; 21: Glucosamine; 22: Glucamine; 23: Glutamic acid; 24: Lysine; 25: Tartaric acid; 26: Gluconic acid; 27: Serine; 28: Quinic acid; 29: ketoglutaric acid; 30: Malonic acid; 31: Arginine; 32: Succinamide; 33: Tyrosine; 34: Hydroxy-butyric acid.
**D:** Factor map of SIR responses soil samples (For the legend, see Fig. 3B).

### EXAMPLES

### Example 1: Epigeal mound sampling

Five *Cubitermes* mounds were sampled in a shrubby savanna located 50 km north of Ouagadougou (Burkina Faso), near the village of Yaktenga. These soils are shallow and rich in gravels above a hard-pan level. Large hydromorphic spots (called "bowé") characterize the landscape, and they are intertwined with deeper soils. Mushroom-shaped *Cubitermes* mounds are located predominantly on the shallow soils. Termite mound materials (5 kg) were pooled, crushed, and passed through a 2-mm sieve in order to obtain a fine powder.

### EXAMPLE 2: Chemical and microbiological characteristics of the Cubitermes mound powder

In order to determine the initial composition of *Cubitermes* mound powder, chemical and microbial analyses were carried out (Table 1). The methods used follow the techniques of Duponnois et al. (Geoderma 124, (2005) 349-361). Briefly, NH₄⁺ and NO₃⁻ contents were measured according to the method of Bremner (Inorganic forms of nitrogen. In: Methods of soil analysis, Part 2, eds Black CA, Agronomy Monographs, Vol 9 ASA and SSA, Madison Wis (1965) pp 1179-1237) and available P content using the method of Olsen et al. (Estimation of available phosphorus in soils by extraction with sodium bicarbonate. Circular, Vol. 939, (1954) U.S. Department of Agriculture, Washington, DC, p 19). Ergosterol content (fungal biomass index) was determined using the Grant and West (J. Microbiol. 6, (1986) 47-53). method and microbial biomass using the fumigation-extraction method (Amato and Ladd, Soil Biol. Biochem. 20, (1988),107-114). Enumeration of colony forming units (CFU) was performed on Difco™ Actinomycete Isolation Agar for the actinomycetes and on Dichloran - Rose-Bengal - Chloramphenicol (DRBC) Agar for the saprophytic fungi.

**Table 1.**

| **Biological and chemical characteristics of *Cubitermes* mound powder** | |
|---|---|
| NH₄⁺ (µg N g⁻¹ of dry mound powder) | 40.9 |
| NO₃⁻ (µg N g⁻¹ of dry mound powder) | 206.9 |
| Available P (µg g⁻¹ of dry mound powder) | 7.7 |
| Microbial biomass (µg C g⁻¹ of dry mound powder) | 17.0 |
| Actinomycetes (x 10² CFU g⁻¹ of dry mound powder) | 37.3 |
| Ergosterol (µg g⁻¹ of dry mound powder) | 1.38 |

### Example 3: In vitro screening of Cubitermes mound powder as inhibitor of S. hermonthica seed germination in axenic experiment

The effect of *Cubitermes* mound powder on *Striga* germination was investigated in an axenic experiment. Seeds of *S. hermonthica* were collected from parasitic plants growing in a sorghum field at Kambouinsé (20 km from Ouagadougou, Burkina Faso). This field was heavily infested by *S. hermonthica,* with >10 *Striga* shoots.m^{-2.} The seeds were surface-sterilized for 5 min in 70% ethanol, and then for 10 min in an aqueous 1% NaOCl solution. Seeds were rinsed >5 times with sterile water, and approximately 100 seeds were kept on sterile and moistened Whatman glass fiber paper disks (1 cm diameter; Whatman Int., Maidstone, England) in sterile Petri dishes.

Plates were then placed in the dark at 30°C in an incubator for at least 14 days. Synthetic germination stimulant (Strigol GR-24) must be added to induce *Striga* seed germination (Johnsson et al., Weed Res. 16, (1976) 223-227; Bouillant et al., C.R. Acad. Sci. III-vie 320 (2), (1997), 159-162). A 1L stock was made by dissolving 100 mg of GR-24 in 10 mL of acetone, and by diluting it with sterile distilled water. The stock was kept at 4°C.

*Cubitermes* effects on the seed germination were assessed using three suspensions of *Cubitermes* mound powder (0.01; 0.1 and 1g l⁻¹). Paper disks containing conditioned seeds were air-dried in axenic conditions, and placed into Petri dishes (5 cm diameter) containing glass-fiber disks impregnated with a mixture of GR-24 and *Cubitermes* mound suspensions (in a 9:1 v:v ratio). One mixture represents one treatment and five replicates were used per treatment. As a control, the seeds were inoculated with the synthetic germination stimulant alone. Plates were incubated for 4 days in the dark at 30°C, and germinated *Striga* seeds were counted under 250X magnification.

### Example 4: Greenhouse experiment

A greenhouse experiment was conducted with sorghum to determine if *Cubitermes* mound material can be used to promote plant growth as well as reduce *S. hermonthica* parasitism. Seeds of sorghum were surface-sterilized with 1% NaOCl for 15 min and rinsed with demineralised water. They were pre-germinated for two days in Petri dishes on humid filter paper at 25°C in the dark. When rootlets were 1-2 cm long, the seedlings were transplanted in soil naturally infested by *Striga,* which originated from the same sorghum field from which *Striga* seeds were collected. Before use, the soil was crushed, passed through a 2-mm sieve and carefully mixed in order to ensure the homogeneity of the *Striga* seed bank in the soil. The chemical and physical characteristics of this sandy soil were as follows: pH (H₂O) 5.6, clay 4.6%, coarse silt 0.8%, fine sand 25.5%, coarse sand 69.1%, C 2.05 g/kg, N 0.40 g/kg, C/N ratio 5.1, soluble P 4.3 mg/kg, total P 116 mg/kg. Plastic pots (5 dm³) were filled with soil mixture, in a 1:10 (w / v) ratio with *Cubitermes* mound powder and the *Striga* infested soil. The control treatment consisted of untreated *Striga*-infested soil. Each pot received one pre-germinated seed of sorghum which was grown at ambient temperature from 15°C to 40°C with daily watering without fertilizer. There were eight replicates per treatment arranged in a completely randomized design.

The number of emerged *Striga* plants, the time of emergence and the height of sorghum plants were recorded weekly. After 14-weeks, plants were uprooted and their root systems gently washed. The sorghum roots were cleared and stained, as described by Phillips et al., Trans. Brit. Mycol. Soc. 55, (1970), 158-161). They were placed on a slide for microscopic observation at 250X magnification (Brundrett et al., Can. J. Bot. 63, (1985), 184-194). 100 1-cm root pieces were observed per sorghum plant. The mycorrhizal colonization was expressed as [(the number of mycorrhizal root pieces) / (total number of observed root pieces) x 100]. The oven-dried weight of shoots and roots of sorghum plants was measured as well as those of *Striga* (65°C, 1 week).

The soil from each pot was mixed thoroughly and 100 g sub-samples were taken and kept at 4°C for further analysis. CFU enumeration of actinomycetes and saprophytic fungi was performed as described above.

### Example 5: Measurement of the catabolic diversity of microbial communities in soil treatments

Microbial functional diversity in soil treatments was assessed by measuring the patterns of *in situ* catabolic potential (ISCP) of microbial communities (Degens and Harris, 1997). Thirty-four substrates, comprising a range of amino acids, carbohydrates, organic acids and amides (Table 2), were screened for differences in SIR (Substrate Induced Respiration) responsiveness among soil treatments. The substrate concentrations providing optimum SIR responses were as follows: 15 mM for amino acids, 75 mM for carbohydrates, 15 mM for amides, 100 mM for carboxylic acids and 100 mM for cyclohexane (Degens et al., Soil Biol. Biochem. 29, (1997),1309-1320). The substrates solutions (in 2-ml sterile distilled water) were added to 1.0 g dry soil in 10-ml bottles (West et al., J. Microb. Meth. 5, (1986) 177-189). CO₂ production from basal respiratory activity in the soil samples was measured by adding 2-ml sterile distilled water to 1 g equivalent dry mass of soil. After the addition of the substrate solutions to soil samples, bottles were immediately closed and kept at 28°C for 4h. CO₂ fluxes from the soils were measured using an infrared gas analyzer (IRGA) (Polytron IR CO₂, Dräger™) in combination with a thermal flow meter (Heinemeyer et al., Plant Soil 116, (1989) 77-81). Results were expressed as µg CO₂ g⁻¹ soil h⁻¹. Catabolic richness and catabolic evenness were calculated to evaluate the catabolic diversity of both soil treatments. Catabolic richness, R, corresponds to the number of substrates used by microorganisms in each soil treatment. Catabolic evenness, *E*, represents the variability of substrate used among the range of substrates tested, and it was calculated using the Simpson-Yule index, *E* = 1/p²ᵢ with pᵢ = (respiration response to individual substrates) / (total respiration activity induced by all substrates for a soil treatment) (Magurran, Ecological Diversity and Its Measurement. Croom Helm, London.(1988)).

**Table 2.**

| **List of substrates and their concentration providing optimum responses of respiration used in SIR (Substrates Induced Respiration) techniques** | |
|---|---|
| *Amino acids (15 mM):* | *Carboxylic acids (100 mM):* |
| L - Phenylalanine | Ascorbic acid |
| L - Tyrosine | Citric acid |
| L - Cystéine | DL-α-hydroxybutyric acid |
| L - Arginine | Formic acid |
| L - Aspargine | Fumaric acid |
| L - Glutamine | Gallic acid |
| L - Histidine | Gluconic acid |
| L - Serine | α - Ketoglutaric acid |
| L - Lysine | Malic acid |
| L - Glutamic acid | Malonic acid |
| | Oxalic acid |
| *Carbohydrates (75 mM):* | Quinic acid |
| D - Glucose | Succinic acid |
| D - Mannose | Tartaric acid |
| Sucrose | Tri-citrate |
| | Uric acid |
| *Amides (15 mM):* | α- Ketobutyric acid |
| D-Glucosamine | |
| Succinamide | *Cyclohexane (100 mM)* |
| N-Methyl-D-Glucamine | Cyclohexane |

### Example 6: Statistical analysis

All data were subjected to a one-way analysis of variance and the mean values were compared using Student's t test (p < 0.05). The percentages of mycorrhization were transformed before statistical analysis (arcsin value of square root). Co-inertia multivariate analysis was used (Dray *et al.,* (2003)) to describe the relationship between two data sets: Sorghum and *Striga* growth and microbial parameters (saprophytic fungi and actinomycetes infestation, mycorrhizal colonization) on one side, and SIR responses on the other side. Co-inertia analysis is a theoretical simplest multivariate analysis technique. A simple, Monte Carlo-like permutation test was then used to assess the relationship between the two data sets. Computations and graphic displays were made using the software ADE-4 (Thioulouse et al., Stat. Comput. 7, (1997) 75-83), available at http://pbil.univ-lyon1.fr/ADE-4/.

### RESULTS

### Effect of Cubitermes mound powder on Striga seed germination in vitro

*Striga* seed germination was not significantly different when exposed to GR-24 alone or GR-24 supplemented with *Cubitermes* mound suspension at 0.01, 0.1 or 1 g ml⁻¹. The germination rates obtained after inoculation of these four suspensions were 55.2%, 64.6%, 64.8% and 61.4, respectively. This means that *Cubitermes* mound material did not have a significant direct effect on *Striga* seed germination.

### Effect of Cubitermes mound powder on sorghum and Striga

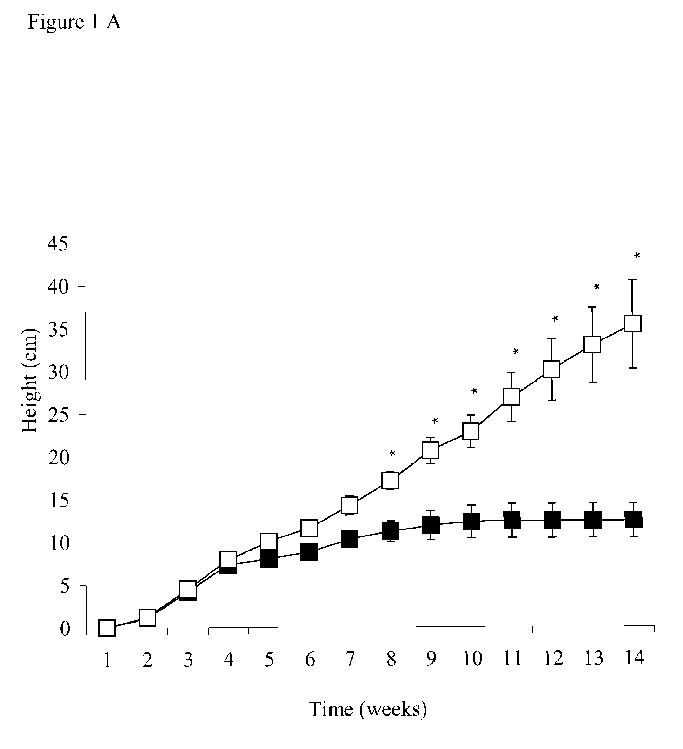

*Cubitermes* mound powder added to the soil significantly increased the height of sorghum plants from 5 weeks on (Fig. 1A). *Striga* emergence started at 4 weeks, and *Cubitermes* mound powder amendment decreased the number of *Striga* plants emerged per pot from 5 weeks on (Fig. 1B, Table 4). The height of *Striga* plants was significantly decreased by amendment between 6 and 10 weeks, but from week 11 on fluctuation in the controls was particularly high and the difference between treatments was not statistically significant (Fig. 1C, Table 4).

No significant effects of the termite mound amendment were found on the shoot and root biomass of emerged *Striga* at 14 weeks (Table 4). At 14 week, the height, shoot and root biomasses and mycorrhizal colonization of sorghum plants were significantly higher in the soil amended with *Cubitermes* powder than in the control treatment (Table 3).

**Table 3.**

| **Effect of *Cubitermes* mound powder amendment on the growth of sorghum plants, mycorrhizal colonization and CFU enumeration of saprophytic fungi and actinomycetes after 14-weeks culture.** | | |
|---|---|---|
| | With *Cubitermes* mound powder | Without *Cubitermes* mound powder |
| Height (cm) | 35.2 (5.2)⁽¹⁾ a⁽²⁾ | 12.4 (1.99) b |
| Shoot biomass (g dry weight) | 6.09 (1.07) a | 1.24 (0.26) b |
| Root biomass (g dry weight) | 2.46 (0.58) a | 0.57 (0.12) b |
| Mycorrhizal colonization (%) | 45.7 (1.57) a | 32.1 (1.89) b |
| Saprophytic fungi (x 10³ CFU g⁻¹ of soil) | 6.2 (0.89) a | 8.8 (0.52) b |
| Actinomycetes (x 10³ CFU g⁻¹ of soil) | 5.7 (0.85) a | 13.6 (0.51) b |

| | | |
|---|---|---|
| ⁽¹⁾ Standard error of the mean. ⁽²⁾ Means in the same line followed by the same letter are not significantly different according to one-way analysis of variance (p < 0.05). | | |

**Table 4.**

| **Effect of *Cubitermes* mound powder amendment on the number of *S. hermonthica* emerged, height and shoot and root biomass of *S. hermonthica* after 14-week culture.** | | |
|---|---|---|
| | With *Cubitermes* mound powder | Without *Cubitermes* mound powder |
| Height (cm) | 10.9 (1.65) ⁽¹⁾ a ⁽²⁾ | 13.7 (2.03) a |
| Shoot biomass (g dry weight) | 2.19 (0.66) a | 2.92 (0.24) a |
| Root biomass (g dry weight) | 0.205 (0.063) a | 0.203 (0.029) a |
| Number of *Striga* emerged | 4.2 (1.22) a | 8.1 (1.61) b |

| | | |
|---|---|---|
| ⁽¹⁾ Standard error of the mean. ⁽²⁾ Means in the same line followed by the same letter are not significantly different according to one-way analysis of variance (p < 0.05). | | |

### Effect of Cubitermes mound powder on key microbial groups

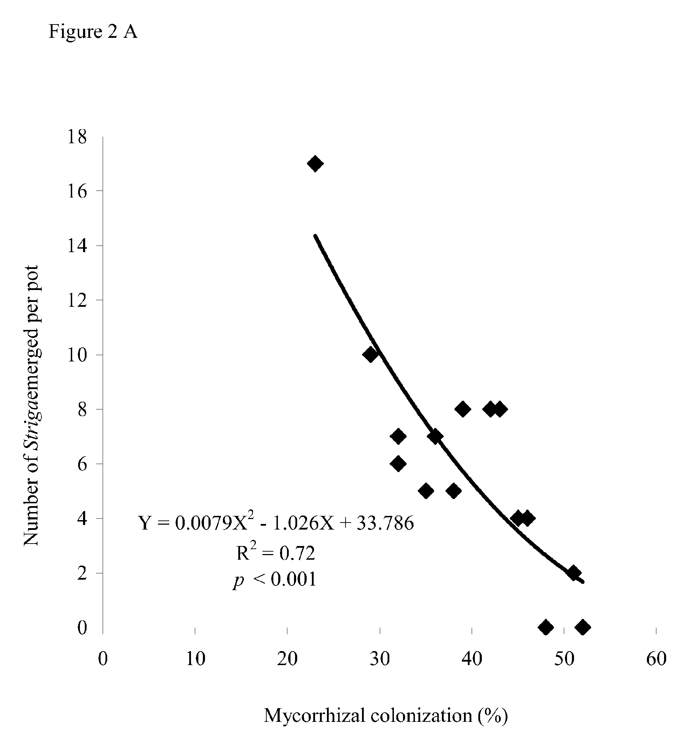

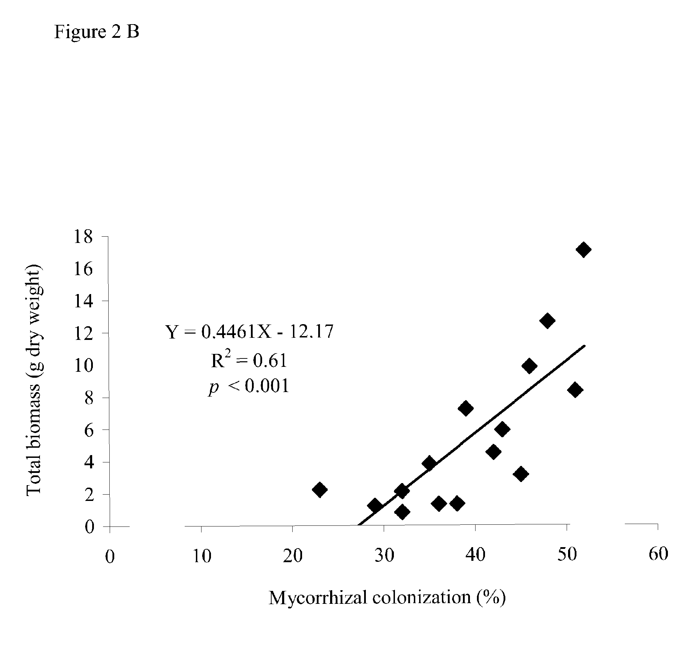

The numbers of saprophytic fungi and actinomycetes were significantly higher in the control than in the amended soil (Table 3) but the differences were not biologically significant. Mycorrhizal colonization was negatively correlated with the number of emerged *Striga* plants per pot (r = 0.85; *p* < 0.05) (Fig. 2A) and positively correlated with Sorghum growth (r = 0.78; *p* < 0.05) (Fig. 2B).

### Effect of Cubitermes powder on the catabolic potential of microbial community

Microbial catabolic richness and evenness were not significantly different in the two treatments (*R* = 33.7 and *E* = 22.9 for the control and *R* = 34.0 and *E* = 23.5 for the *Cubitermes* treatment). The co-inertia analysis of parameters related to plant growth, saprophytic fungi, actinomycetes, *Striga* infestation and SIR responses showed that the relationship between the two data sets was significant. There was a strong relationship between plant growth and microbial parameters and SIR responses (Monte Carlo permutation; *p* < 10⁻³). However, there was also a strong relationship between plant growth and *Cubitermes* mound powder amendment (Figure 3). The factor map of co-inertia analysis for plant growth and microbial variables (Fig. 3A) showed the formation of two clusters: one with sorghum growth and mycorrhizal colonization parameters and the other with parameters related to saprophytic fungi, actinomycetes and *Striga* infestation. A clear distinction between amended (Am) and non-amended (NAm) soil samples was noted (Fig. 3B). The interpretation of whole factor map showed that sorghum growth was clearly enhanced in the amended soil (right part of the figure), while *Striga* was favored in the non-amended soil (left part of the figure). The non-amended soil was more colonized by actinomycetes while mycorrhizal colonization was larger in the amended soil. The two soil treatments based on SIR responses could also be distinguished. Indeed, the amended soil was characterized by its response to phenylalanine and the non-amended soil by its response to hydroxybutyric acid (Fig. 3C and 3D).

## Claims

1. Use of termite mound powder of *Cubitermes* genus for the biological control of parasitic plants.

2. Use of termite mound powder according to claim 1, wherein the parasitic plants are hemiparasitic plants.

3. Use of termite mound powder according to claims 1 or 2, wherein hemiparasitic plants are selected from the family group consisting of *Custaceae, Lauraceae, Orobanchaceae, Loranthaceae and Viscaceae,.*

4. Use of termite mound powder according to anyone of claims 1 to 3, wherein hemiparasitic plants of the *Orobanchaceae* family group are selected from the genus group consisting of *Alectra spp., Striga spp...*

5. Use of termite mound powder according to anyone of claims 1 to 4, wherein hemiparasitic plants of the *Striga spp.* genus group are selected from the species group consisting of *Striga asiatica, Striga hermonthica, Striga Aspera, Striga forbesii, Striga Generioides.*

6. Use of termite mound powder according to anyone of claims 1 to 5, wherein the termite mound powder is in association with a substrate and thus constituting an inoculum.

7. Use of termite mound powder according to anyone of claims 1 to 6, wherein the ratio termite mound powder versus substrate is comprised from 0.01 (w:v) to 0.1 (w:v).

8. Use of termite mound powder according to anyone of claims 1 to 6, wherein the ratio termite mound powder versus substrate is comprised from 0.05 (w:v) to 0.1 (w:v) or is 0.1 (w:v).

9. Use of termite mound powder according to anyone of claims 1 to 8, in spaces intended for cultures.

10. Process of biological control of parasitic plants in spaces intended for cultures, particularly cultures of cereals, comprising a step of introducing an inoculum in spaces intended for cultures to be treated, the inoculum being prepared by mixing the termite mound powder of the *Cubitermes* genus with a substrate, said powder being crushed.

11. Process according to claim 10, wherein the powder consists of particles size having a size comprised from 100 µm to 1000 µm.

12. Process according to anyone of claims 10 or 11, comprising a step of preparation of the inoculum by mixing said termite mound powder with a substrate, said substrate being chosen among the natural culture soil, the compost arising from culture residues, the ratio termite mound powder: substrate being comprised from 0.01 (w:v) to 0.1 (w:v).

13. Process according to anyone of claims 10 to 12, comprising a step of introduction of the inoculum in spaces intended for cultures, at doses comprised from 17 to 170 ml of inoculum per seed or plant.

14. Process according to anyone of claims 10 to 13, wherein one seed is sown or one plant is transferred per dose of inoculum introduced in the spaces intended for cultures.

15. Process of biological control of parasitic plants according to anyone of claims 10 to 14 comprising the following steps :
**a.** sampling and crushing termite mound powder, the particles size of said powder having a size comprised from 100 µm to 1000 µm,
**b.** preparing an inoculum by mixing said powder with a substrate, said substrate being chosen among the natural culture soil, the compost arising from culture residues, the ratio termite mound powder: substrate being comprised from 0.01 (w:v) to 0.1 (w:v),
**c.** introducing the inoculum in spaces intended for cultures, at doses comprised from 17 ml to 170 ml of inoculum per seed or plant,
**d.** sowing one seed or transferring one plant in spaces intended for cultures containing said inoculum.

## Patentansprüche

1. Verwendung des Staubs eines Termitenhügels der Gattung *Cubitermes* zur biologischen Bekämpfung parasitärer Pflanzen.

2. Verwendung des Staubs eines Termitenhügels nach Anspruch 1, wobei die parasitären Pflanzen hemiparasitäre Pflanzen sind.

3. Verwendung des Staubs eines Termitenhügels nach einem der Ansprüche 1 oder 2, wobei die hemiparasitären Pflanzen ausgewählt werden aus der Familiengruppe bestehend aus *Custaceae, Lauraceae, Orobanchaceae, Loranthaceae* und *Viscaceae.*

4. Verwendung des Staubs eines Termitenhügels nach einem der Ansprüche 1 bis 3, wobei die hemiparasitären Pflanzen der Familiengruppe *Orobanchaceae* ausgewählt werden aus der Gattungsgruppe bestehend aus *Alectra spp., Striga spp...*

5. Verwendung des Staubs eines Termitenhügels nach einem der Ansprüche 1 bis 4, wobei die hemiparasitären Pflanzen der Gattungsgruppe *Striga spp.* ausgewählt werden aus der Artengruppe bestehend aus *Striga asiatica, Striga hermonthica, Striga aspera, Striga forbesii, Striga generioides.*

6. Verwendung des Staubs eines Termitenhügels nach einem der Ansprüche 1 bis 5, wobei der Staub eines Termitenhügels mit einem Nährboden verbunden ist und somit ein Inokulum darstellt.

7. Verwendung des Staubs eines Termitenhügels nach einem der Ansprüche 1 bis 6, wobei das Verhältnis von Staub eines Termitenhügels zu Nährboden zwischen 0,01 (w:v) und 0,1 (w:v) liegt.

8. Verwendung des Staubs eines Termitenhügels nach einem der Ansprüche 1 bis 6, wobei das Verhältnis von Staub eines Termitenhügels zu Nährboden zwischen 0,05 (w:v) und 0,1 (w:v) liegt oder 0,1 (w:v) beträgt.

9. Verwendung des Staubs eines Termitenhügels nach einem der Ansprüche 1 bis 8 in für Kulturen gedachten Räumen.

10. Verfahren zur biologischen Bekämpfung parasitärer Pflanzen in für Kulturen gedachten Räumen, insbesondere Getreidekulturen, das einen Schritt des Einbringens eines Inokulums in für zu behandelnde Kulturen gedachte Räume, wobei das Inokulum hergestellt wird durch Mischen des Staubs eines Termitenhügels der Gattung *Cubitermes* mit einem Nährboden, wobei der Staub zerkleinert wird.

11. Verfahren nach Anspruch 10, wobei der Staub aus Partikelgrößen besteht, die eine Größe zwischen 100 *µ*m und 1000 *µ*m aufweisen.

12. Verfahren nach einem der Ansprüche 10 oder 11, das den Schritt des Herstellens eines Inokulums umfasst durch Mischen des Staubs eines Termitenhügels mit einem Nährboden, wobei der Nährboden ausgewählt wird aus dem natürlichen Kulturboden, dem Kompost, der aus Kulturrückständen entsteht, wobei das Verhältnis von Staub eines Termitenhügels : Nährboden zwischen 0,01 (w:v) und 0,1 (w:v) liegt.

13. Verfahren nach einem der Ansprüche 10 bis 12, das einen Schritt des Einbringens des Inokulums in für Kulturen gedachte Räume umfasst in Dosen zwischen 17 und 170 ml Inokulum pro Samen oder Pflanze.

14. Verfahren nach einem der Ansprüche 10 bis 13, wobei pro Dosis des in die für Kulturen gedachten Räume eingebrachten Inokulums ein Samen gesät oder eine Pflanze übertragen wird.

15. Verfahren zur biologischen Bekämpfung parasitärer Pflanzen nach einem der Ansprüche 10 bis 14, das die folgenden Schritte umfasst:
a. Entnehmen einer Probe und Zerkleinern von Staub eines Termitenhügels, wobei die Partikelgröße des Staubs eine Größe zwischen 100 *µ*m und 1000 *µ*m aufweist,
b. Herstellen eines Inokulums durch Mischen des Staubs mit einem Nährboden, wobei der Nährboden ausgewählt wird aus dem natürlichen Kulturboden, dem Kompost, der aus Kulturrückständen entsteht, wobei das Verhältnis von Staub eines Termitenhügels : Nährboden zwischen 0,01 (w:v) und 0,1 (w:v) liegt,
c. Einbringen des Inokulums in für Kulturen gedachte Räume in Dosen zwischen 17 ml und 170 ml Inokulum pro Samen oder Pflanze,
d. Aussäen eines Samens oder Übertragen einer Pflanze in für Kulturen gedachte Räume, die das Inokulum enthalten.

## Revendications

1. Utilisation de poudre de termitière du genre *Cubitermes* pour le contrôle biologique de plantes parasites.

2. Utilisation de poudre de termitière selon la revendication 1, dans laquelle les plantes parasites sont des plantes hémiparasites.

3. Utilisation de poudre de termitière selon la revendication 1 ou 2, dans laquelle les plantes hémiparasites sont sélectionnées dans le groupe de familles consistant en les *Custaceae*, les *Lauraceae,* les *Orobanchaceae,* les *Loranthaceae* et les *Viscaceae.*

4. Utilisation de poudre de termitière selon l'une des revendications 1 à 3, dans laquelle les plantes hémiparasites du groupe de la famille *Orobanchaceae* sont sélectionnées dans le groupe de genres consistant en *Alectra spp., Striga spp..*

5. Utilisation de poudre de termitière selon l'une des revendications 1 à 4, dans laquelle les plantes hémiparasites du groupe du genre *Striga spp.* sont sélectionnées dans le groupe d'espèces consistant en *Striga asiatica, Striga hermonthica, Striga Aspera, Striga forbesii, Striga Generioides.*

6. Utilisation de poudre de termitière selon l'une des revendications 1 à 5, dans laquelle la poudre de termitière est en association avec un substrat, constituant ainsi un inoculum.

7. Utilisation de poudre de termitière selon l'une des revendications 1 à 6, dans laquelle le ratio poudre de termitière versus substrat est compris de 0,01 (p:v) à 0,1 (p:v).

8. Utilisation de poudre de termitière selon l'une des revendications 1 à 6, dans laquelle le ratio poudre de termitière versus substrat est compris de 0,05 (p:v) à 0,1 (p:v) ou est 0,1 (p:v).

9. Utilisation de poudre de termitière selon l'une des revendications 1 à 8, dans des espaces destinés aux cultures.

10. Procédé de contrôle biologique de plantes parasites dans des espaces destinés aux cultures, en particulier aux cultures de céréales, comprenant une étape d'introduction d'un inoculum dans des espaces destinés aux cultures à traiter, l'inoculum étant préparé en mélangeant la poudre de termitière du genre *Cubitermes* avec un substrat, ladite poudre étant écrasée.

11. Procédé selon la revendication 10, dans lequel la poudre consiste en des particules ayant une taille comprise de 100 µm à 1000 µm.

12. Procédé selon l'une des revendications 10 ou 11, comprenant une étape de préparation de l'inoculum en mélangeant ladite poudre de termitière avec un substrat, ledit substrat étant choisi parmi le sol de culture naturel, le compost résultant des résidus de culture, le ratio poudre de termitière : substrat étant compris de 0,01 (p:v) à 0,1 (p:v).

13. Procédé selon l'une des revendications 10 à 12, comprenant une étape d'introduction de l'inoculum dans des espaces destinés aux cultures, à des doses comprises de 17 à 170 mL d'inoculum par graine ou plante.

14. Procédé selon l'une des revendications 10 à 13, dans lequel une graine est semée ou une plante est transférée par dose d'inoculum introduite dans les espaces destinés aux cultures.

15. Procédé de contrôle biologique de plantes parasites selon l'une des revendications 10 à 14 comprenant les étapes suivantes :
a. le prélèvement et l'écrasement de poudre de termitière, les particules de ladite poudre ayant une taille comprise de 100 µm à 1000 µm,
b. la préparation d'un inoculum en mélangeant ladite poudre avec un substrat, ledit substrat étant choisi parmi le sol de culture naturel, le compost résultant de résidus de culture, le ratio poudre de termitière : substrat étant compris de 0,01 (p:v) à 0,1 (p:v),
c. l'introduction de l'inoculum dans des espaces destinés aux cultures, à des doses comprises de 17 mL à 170 mL d'inoculum par graine ou plante,
d. l'ensemencement d'une graine ou le transfert d'une plante dans des espaces destinés aux cultures contenant ledit inoculum.
